# FASCICULE DE BREVET EUROPEEN

(11) **EP 3 301 331 B1**
(45) Date de publication et mention de la délivrance du brevet: **22.07.2020**
(21) Numéro de dépôt: 17186759.1
(22) Date de dépôt: 18.08.2017
(51) Int. Cl.: F16H 57/04, B64C 27/12

(54) **DISPOSITIF DE LUBRIFICATION MUNI DE PLUSIEURS RESERVOIRS DE RECUPERATION DU LIQUIDE DE LUBRIFICATION ET DE MOYENS D'ACHEMINEMENT OPTIMISES ET FIABLES VERS UN RESERVOIR PRINCIPAL**
SCHMIERVORRICHTUNG, DIE MIT MEHREREN AUFFANGBECKEN FÜR DIE SCHMIERFLÜSSIGKEIT AUSGESTATTET IST, UND OPTIMIERTE UND ZUVERLÄSSIGE WEITERLEITUNGSMITTEL ZUM HAUPTTANK
LUBRICATING DEVICE HAVING A PLURALITY OF VESSELS FOR RECOVERING LUBRICATING LIQUID AND OPTIMISED, RELIABLE MEANS FOR ROUTING TO A MAIN VESSEL

(30) Priorité: 09.09.2016 FR 1601333
(43) Date de publication de la demande: 04.04.2018
(73) Titulaire: AIRBUS HELICOPTERS, 13725 Marignane Cedex (FR)
(72) Inventeur: DE MEERSCHMAN, Olivier, 13410 LAMBESC (FR)
(74) Mandataire: GPI & Associés

(56) Documents cités:
- EP-A1- 3 015 743
- DE-A1- 4 227 119
- DE-A1- 10 051 356
- DE-A1- 10 237 417
- US-A- 4 153 141
- US-A1- 2010 229 823
- US-A1- 2014 076 661

## Description

La présente invention se rapporte au domaine de la lubrification des systèmes de transmission de puissance, en particulier des systèmes de transmission de puissance destinés à un aéronef à voilure tournante.

La présente invention concerne un dispositif de lubrification muni de plusieurs réservoirs de récupération de liquide de lubrification ainsi que de moyens d'acheminement optimisés et fiables vers un réservoir principal. Ce dispositif de lubrification est destiné à la lubrification d'un système mécanique et est particulièrement adapté à la lubrification d'un système de transmission de puissance d'un aéronef à voilure tournante, dit « système de transmission » par la suite.

Un système mécanique comporte généralement des éléments tournants, tels que des arbres et des roulements, ainsi que des éléments de transmission de puissance et de réduction ou d'augmentation de vitesse de rotation, tels que des pignons et/ou des engrenages. Il est alors essentiel pour le bon fonctionnement du système mécanique de lubrifier et de refroidir ces éléments par exemple par un liquide de lubrification sous pression tel que de l'huile. Cette lubrification est en général assurée par un circuit de lubrification et a pour fonctions principales de limiter l'usure et l'échauffement de ces éléments du système mécanique et, par suite, de prolonger la durée de vie du système mécanique. Sans une telle lubrification, le fonctionnement du système mécanique peut être rapidement dégradé, voire impossible.

Suite à cette lubrification du système mécanique, l'huile circulant dans le circuit de lubrification peut être parfois très chaude et doit alors être refroidie dans un circuit de refroidissement généralement extérieur au système mécanique avant d'être de nouveau utilisable pour la lubrification du système mécanique. Ce circuit de refroidissement comporte par exemple un échangeur thermique, tel un échangeur thermique huile/air.

Un circuit de lubrification comporte également un générateur de débit telle une pompe afin d'alimenter le circuit de lubrification avec l'huile stockée dans un réservoir et de permettre ainsi sa circulation dans le circuit de lubrification. Ce réservoir est généralement utilisé comme réservoir de récupération, l'huile après lubrification du système mécanique étant récupérée dans ce réservoir afin d'alimenter de nouveau le circuit de lubrification.

Un dispositif de lubrification d'un système mécanique comporte ainsi un circuit de lubrification principal, un réservoir contenant un liquide de lubrification et un générateur de débit ainsi qu'éventuellement un circuit de refroidissement. Ce réservoir est par exemple formé par la partie basse d'un carter contenant ce système mécanique.

Un dispositif de lubrification peut également comporter un circuit de lubrification de secours afin de pallier un dysfonctionnement générant par exemple une chute, voire une perte, de pression dans le circuit de lubrification. Cette chute de pression peut être consécutive à une panne du générateur de débit ou bien une fuite sur le circuit de lubrification principal ou le circuit de refroidissement. Un tel circuit de lubrification de secours permet alors d'assurer au moins une lubrification des organes essentiels du système mécanique afin d'assurer un fonctionnement, éventuellement en mode dégradé, de ce système mécanique. Ce circuit de lubrification de secours permet alors, lorsque ce système mécanique est par exemple une boîte de transmission principale de puissance d'un aéronef, le fonctionnement de l'aéronef afin d'atteindre un lieu d'atterrissage. Un tel circuit de lubrification de secours améliore ainsi la sécurité de l'aéronef.

Le circuit de lubrification principal et le circuit de lubrification de secours peuvent utiliser le même réservoir contenant le liquide de lubrification.

Le circuit de lubrification de secours peut également utiliser un réservoir auxiliaire dédié, indépendant d'un réservoir principal utilisé par le circuit de lubrification principal, comme décrit dans le document FR 2826094. Ce réservoir auxiliaire est dans ce cas totalement indépendant du circuit principal de lubrification.

Le retour du liquide de lubrification en direction du réservoir est généralement réalisé sans moyen particulier, par un simple effet de gravité. Le liquide de lubrification ruisselle ainsi sur les éléments du système mécanique et le long des parois d'un carter contenant ce système mécanique afin d'être directement récupéré par le réservoir formé par exemple par la partie inférieure de ce carter.

De plus, un système mécanique peut comporter plusieurs zones ayant un besoin important en lubrification. Ce système mécanique peut alors être associé à un carter unique afin de récupérer le liquide de lubrification provenant de ces différentes zones. L'utilisation d'un tel carter unique peut toutefois générer des problèmes d'encombrement et de masse importants, qui peuvent être préjudiciables notamment pour un système mécanique équipant un aéronef.

Une séparation de ce carter unique en plusieurs carters, formant chacun un réservoir de récupération du liquide de lubrification provenant de ces différentes zones, pose également des problèmes de complexité et de fonctionnement du dispositif de lubrification de ce système mécanique. En effet, ce dispositif de lubrification doit pouvoir utiliser le liquide de lubrification récupéré par chaque carter afin d'alimenter de nouveau le circuit de lubrification.

Dans ce but, un tel dispositif de lubrification peut par exemple comporter autant de pompes que de carters afin d'aspirer directement le liquide de lubrification récupéré par chacun d'eux. Cette augmentation du nombre de pompes présente plusieurs inconvénients, notamment une augmentation de la masse et des coûts du dispositif de lubrification ainsi qu'une augmentation du risque de pannes du dispositif de lubrification et, par suite, tend à diminuer sa fiabilité.

Ce nombre de pompes peut être réduit en utilisant un réservoir principal formé par un de ces carters et alimenté en liquide de lubrification par les autres carters, formant chacun un réservoir de récupération. Ce dispositif de lubrification peut alors utiliser une seule pompe d'alimentation du circuit de lubrification par le liquide de lubrification situé uniquement dans le réservoir principal avec la mise en place de systèmes d'acheminement du liquide de lubrification situé dans les réservoirs de récupération vers le réservoir principal.

Chaque système d'acheminement comporte des canalisations reliant chaque réservoir de récupération au réservoir principal. Ces canalisations permettent ainsi l'acheminement par gravité du liquide de lubrification des réservoirs de récupération vers le réservoir principal. Cet acheminement par gravité impose alors que le réservoir principal soit agencé au moins partiellement en dessous des réservoirs de récupération, ce qui peut avoir un impact sur l'implantation des réservoirs de récupération et du réservoir principal et, par suite, provoquer une augmentation de l'encombrement du dispositif de lubrification.

Afin de limiter cette augmentation de l'encombrement du dispositif de lubrification, le système d'acheminement peut alors comporter une ou plusieurs pompes complémentaires de récupération afin de permettre l'acheminement du liquide de lubrification situé dans les réservoirs de récupération vers le réservoir principal quelles que soient leurs positions. Ces pompes complémentaires de récupération agissent ainsi en remplacement de l'effet de la gravité.

L'utilisation de ces pompes complémentaires de récupération s'accompagne comme précédemment d'une augmentation de la masse, du coût et du risque de pannes du dispositif de lubrification.

En outre, ce système d'acheminement se complexifie lorsque l'inclinaison du système mécanique varie au cours de son fonctionnement. C'est notamment le cas pour un système mécanique situé à bord d'un aéronef dont l'assiette en roulis et en tangage peut varier de façon importante au cours d'un vol. Ces variations d'assiettes de l'aéronef s'accompagnent de variations de l'inclinaison du système mécanique ainsi que des réservoirs de récupération et du réservoir principal.

En effet, suite à ces variations de l'inclinaison des réservoirs de récupération et du réservoir principal, le réservoir principal peut ne plus être positionné en dessous des réservoirs de récupération. En conséquence, l'acheminement sous l'effet de la gravité du liquide de lubrification entre les réservoirs de récupération et le réservoir principal peut être interrompu, provoquant par la suite l'apparition de perturbations, voire de l'arrêt de la lubrification du système mécanique.

De plus, ces variations de l'inclinaison des réservoirs de récupération et du réservoir principal entraîne une changement de la position du volume de liquide de lubrification dans chaque réservoir qui peut avoir pour conséquence un arrêt de l'alimentation des canalisations en liquide de lubrification et, par suite, l'arrêt de l'alimentation du réservoir principal.

De même, ce changement de la position du volume de liquide de lubrification dans chaque réservoir peut provoquer un arrêt de l'alimentation du réservoir principal par les pompes complémentaires de récupération, le point d'aspiration de chaque pompe étant alors situé hors du volume de liquide de lubrification. De plus, chaque pompe peut également être endommagée par un phénomène de cavitation.

En outre, des zones de rétention de liquide de lubrification peuvent apparaître dans les réservoirs de récupération, le liquide de lubrification n'étant alors pas acheminé vers le réservoir principal et, par suite, pas utilisé par le dispositif de lubrification. Le liquide de lubrification situé dans ces zones de rétention constitue ainsi une masse inutilisée. De plus, des particules, telle de la limaille, peuvent rester piégées et s'accumuler dans ces zones de rétention.

Des solutions à ce problème d'acheminement ont été appliquées dans le domaine aéronautique, et en particulier sur les boîtes de transmission mécaniques équipant des aéronefs convertibles à rotors basculants. Ces rotors ont en effet une double fonction de rotors de sustentation et d'hélices propulsives. La boîte de transmission mécanique assurant l'entraînement en rotation de chaque rotor est donc également basculante.

Les documents FR 2831938 et FR 2814522 décrivent des dispositifs d'acheminement de liquide de lubrification utilisables pour les différentes positions d'une boîte de transmission mécanique basculante de ces aéronefs convertibles. Ces dispositifs d'acheminement comportent par exemple deux pompes affectées respectivement à une position de la boîte de transmission mécanique basculante et permettent l'acheminement du liquide de lubrification vers un réservoir. Une autre solution est l'utilisation d'une vis de type vis d'Archimède, dite également « vis sans fin », entraînée en rotation et agencée dans un canal de récupération afin d'alimenter le réservoir en liquide de lubrification. Dans ces deux cas, le dispositif d'acheminement utilise des moyens mécaniques d'entraînement soumis au risque de pannes et ajoutant une masse non négligeable à l'aéronef.

On connaît également les documents DE 4227119 et DE 10237417 qui décrivent des systèmes de lubrification comportant plusieurs réservoirs et utilisent une pompe à jet, désignée également « éjecteur » pour acheminer un liquide de lubrification d'un réservoir auxiliaire vers un réservoir principal.

Le document DE 4227119 décrit un système de lubrification d'une boîte de vitesse d'un engin agricole comportant un réservoir principal et un réservoir auxiliaire. Une pompe permet d'acheminer l'huile du réservoir principal vers les engrenages. Une conduite de retour dirige l'huile vers le réservoir additionnel qui circule alors à travers une pompe à jet afin d'entraîner l'huile contenu dans ce réservoir auxiliaire vers le réservoir principal.

Le document DE 10237417 décrit un système de lubrification d'un moteur à combustion. Ce système de lubrification comporte un carter d'huile, faisant office de réservoir principal. Une zone du carter retient de l'huile qui ne peut pas refluer seule vers le réservoir principal. Ce système de lubrification comporte une pompe à jet positionnée dans cette zone et reliée à une conduite de retour alimentée par une pompe principale afin d'acheminer l'huile située dans cette zone vers le réservoir principal.

Enfin, l'arrière plan technologique de l'invention comporte notamment les documents US 2014/076661 et DE 10051356 qui décrivent un système de lubrification muni de deux réservoirs et d'un dispositif de communication entre ces deux réservoirs.

Par ailleurs, la complexité d'un dispositif de lubrification destiné à lubrifier plusieurs zones d'un système mécanique soumis à des variations d'inclinaison peut encore être accentuée lorsque ces dispositifs de lubrification comportent un circuit de lubrification principal et au moins un circuit de lubrification de secours.

La présente invention a alors pour objet de proposer un dispositif de lubrification d'un système mécanique permettant de s'affranchir des limitations mentionnées ci-dessus, et en particulier d'acheminer un liquide de lubrification dans un réservoir principal à partir de réservoirs de récupération de façon optimisée et fiable, indépendamment de l'inclinaison du système mécanique.

La présente invention a pour but de simplifier le système d'acheminement du liquide de lubrification entre un ou plusieurs réservoirs de récupération et un réservoir principal, tout en minimisant sa masse et limitant les risques de dysfonctionnement.

Selon l'invention, un dispositif de lubrification destiné à la lubrification d'un système mécanique comporte un réservoir principal contenant un liquide de lubrification, au moins un réservoir de récupération, au moins un circuit de lubrification, à savoir un circuit de lubrification principal et au moins un circuit de lubrification de secours, au moins un générateur de débit et un système d'acheminement pour chaque réservoir de récupération, chaque générateur de débit alimentant un circuit de lubrification avec le liquide de lubrification situé dans le réservoir principal, chaque système d'acheminement étant configuré afin d'acheminer le liquide de lubrification situé dans un réservoir de récupération vers le réservoir principal.

Le système mécanique comporte généralement des éléments tournants ainsi que des éléments de transmission de puissance et de réduction ou d'augmentation de vitesse de rotation nécessitant pour leur bon fonctionnement d'être lubrifiés et refroidis par un liquide de lubrification. Ce système mécanique peut comporter plusieurs zones devant être lubrifiées, ces zones pouvant être associées respectivement à des carters séparés formant des réservoirs. Ce liquide de lubrification est stocké dans un réservoir principal et aspiré par l'intermédiaire d'un générateur de débit, par exemple une pompe, afin d'alimenter un circuit de lubrification.

Ce circuit de lubrification permet ensuite de distribuer, par exemple sous forme de pulvérisation, le liquide de lubrification sur les éléments du système mécanique devant être lubrifiés. Le liquide de lubrification s'écoule ensuite, par gravité, et est récupéré dans le réservoir principal et dans un ou plusieurs réservoirs de récupération formés par exemple respectivement par les carters du système mécanique.

Chaque système d'acheminement comporte un éjecteur ainsi que des premières et secondes conduites, l'éjecteur étant agencé dans un réservoir de récupération, les premières conduites étant reliées à l'éjecteur afin d'alimenter l'éjecteur en liquide de lubrification situé dans le réservoir principal, les secondes conduites étant reliées à l'éjecteur afin d'acheminer vers le réservoir principal d'une part le liquide de lubrification circulant dans les premières conduites et alimentant l'éjecteur et d'autre part le liquide de lubrification situé dans le réservoir de récupération. La circulation du flux primaire du liquide de lubrification alimentant l'éjecteur est générée grâce à un générateur de débit.

Ce dispositif de lubrification est remarquable en ce que les premières conduites relient l'éjecteur à au moins un circuit de lubrification de secours.

Un éjecteur est un organe couramment utilisé dans le domaine de la circulation des fluides afin, grâce à un flux primaire d'un premier fluide, d'aspirer un flux secondaire de ce même premier fluide ou bien d'un second fluide et de générer un débit et/ou une pression sur ce flux secondaire avant son éjection hors de l'éjecteur. Les flux primaire et secondaire de ces fluides sont mélangés dans cet éjecteur avant leurs éjections.

Un éjecteur est fréquemment utilisé afin de réguler selon les besoins le débit du carburant circulant à travers un circuit d'alimentation, par exemple destiné à l'alimentation en carburant d'un organe moteur d'aéronef comme décrit dans le document US 3275061.

Dans le cadre du dispositif de lubrification selon l'invention, un flux primaire de liquide de lubrification alimente l'éjecteur par l'intermédiaire des premières conduites, la circulation du flux primaire de liquide de lubrification étant générée grâce à un générateur de débit. L'éjecteur est agencé dans un réservoir de récupération, de préférence au fond de ce réservoir de récupération et se trouve donc généralement immergé au moins partiellement, voire totalement, dans un volume de liquide de lubrification en fonction du volume de liquide de lubrification récupéré dans ce réservoir de récupération. Un flux secondaire de ce liquide de lubrification situé dans le réservoir secondaire est alors aspiré par l'éjecteur, puis refoulé avec le premier flux hors de l'éjecteur et dirigé, par l'intermédiaire des secondes conduites vers le réservoir principal.

De la sorte, le réservoir principal est alimenté d'une part par le liquide de lubrification s'écoulant directement dans ce réservoir principal, et d'autre part par le liquide de lubrification récupéré par chaque réservoir de récupération. Le dispositif de lubrification selon l'invention permet ainsi de garantir une alimentation en liquide de lubrification quasi-permanent du réservoir principal et, par suite, un bon fonctionnement de la lubrification des différentes zones du système mécanique.

Plus précisément, un éjecteur comporte généralement une buse d'admission du flux primaire, un canal secondaire d'admission du flux secondaire, un canal principal muni d'un rétreint et une sortie agencée en aval du rétreint. La buse d'admission communique avec le canal central de façon sensiblement coaxiale alors que le canal secondaire d'admission débouche sur le canal principal généralement de façon sensiblement perpendiculaire, en aval de la buse d'admission et en amont du rétreint. La circulation du flux primaire à l'intérieur du canal principal génère par aspiration une capture du flux secondaire à travers le canal secondaire. Les flux primaire et secondaire se mélangent dans le canal principal en amont du rétreint, puis sont évacués hors de l'éjecteur par la sortie. Les notions amont et aval sont à considérer au regard du sens d'écoulement de ces flux à travers l'éjecteur.

Pour chaque système d'acheminement, les premières conduites sont de la sorte reliées à la buse d'admission de l'éjecteur et les secondes conduites sont reliées à la sortie de l'éjecteur, le canal secondaire d'admission étant immergé au moins partiellement, voire totalement, et, de fait, en contact avec le liquide de lubrification situé dans le réservoir de récupération.

Avantageusement, un éjecteur est un composant passif ne comportant pas de pièce mobile. Le risque de pannes de ce composant est donc très faible et son utilisation sur le dispositif de lubrification selon l'invention ne dégrade pas la fiabilité de ce dispositif de lubrification. De plus, un tel éjecteur ne nécessite pas d'être associé à un composant de secours pour pallier une défaillance peu probable de cet éjecteur.

De plus, l'utilisation d'un tel éjecteur permet de supprimer les contraintes dans l'implantation des réservoirs de récupération vis à vis du réservoir principal. De la sorte, le réservoir principal n'est pas agencé nécessairement en dessous des réservoirs de récupération, ce qui permet ainsi d'optimiser l'encombrement lié à l'implantation des réservoirs de récupération et du réservoir principal.

Selon l'invention, les premières conduites du système d'acheminement relient l'éjecteur à un circuit de lubrification de secours du dispositif de lubrification. La circulation du flux primaire du liquide de lubrification alimentant l'éjecteur est avantageusement générée grâce au générateur de débit alimentant ce circuit de lubrification de secours. Ce mode de réalisation permet avantageusement de n'utiliser aucun composant supplémentaire et d'optimiser ainsi la masse du dispositif de lubrification selon l'invention.

Selon un exemple non revendiqué, le dispositif de lubrification selon l'invention comporte un générateur de débit complémentaire aspirant le liquide de lubrification situé dans le réservoir principal et relié à l'éjecteur par l'intermédiaire des premières conduites du système d'acheminement. De la sorte, la circulation du flux primaire du liquide de lubrification alimentant l'éjecteur est générée grâce ce générateur de débit complémentaire et indépendamment de chaque circuit de lubrification. Cet exemple permet avantageusement de dissocier l'alimentation de chaque circuit de lubrification et l'alimentation de ce système d'acheminement. En particulier, le générateur de débit complémentaire peut être optimisé, notamment en termes de dimensions et de masse, en fonction de sa seule fonction d'acheminement du liquide de lubrification d'un réservoir de récupération vers un réservoir principal.

De plus, dans l'exemple, si le dispositif de lubrification comporte plusieurs systèmes d'acheminement, le générateur de débit complémentaire peut être utilisé conjointement pour alimenter l'éjecteur de chaque système d'acheminement.

Toutefois, un générateur de débit complémentaire peut être associé à chaque système d'acheminement afin d'alimenter individuellement l'éjecteur de ce système d'acheminement.

Le dispositif de lubrification selon l'invention est particulièrement adapté au système mécanique comportant plusieurs zones à lubrifier et dont l'inclinaison peut varier. En effet, des variations de l'inclinaison du système mécanique s'accompagnent de variations de l'inclinaison des réservoirs de récupération et du réservoir principal. Avantageusement, un éjecteur ne se dégrade pas si son canal secondaire d'admission n'est plus immergé dans un liquide, contrairement à une pompe pour laquelle un phénomène de cavitation peut apparaître. Dans ce cas l'acheminement du liquide de lubrification situé dans les réservoirs de récupération vers le réservoir principal est arrêté temporairement, sans dégradation de l'éjecteur, et l'acheminement en liquide de lubrification peut reprendre dès que l'éjecteur est de nouveau immergé suite à un retour vers une inclinaison plus proche de l'inclinaison nominale du système mécanique ou bien une augmentation du volume de liquide de lubrification.

En outre, selon des variantes applicables aux deux modes de réalisation de l'invention précédemment décrits, le système d'acheminement peut comporter des canalisations reliant les réservoirs de récupération au réservoir principal et permettant un écoulement par gravité du liquide de lubrification de chaque réservoir de récupération vers le réservoir principal.

Selon une première variante, ces canalisations permettent un écoulement par gravité du liquide de lubrification de chaque réservoir de récupération vers le réservoir principal uniquement à partir d'une certaine inclinaison des réservoirs. Cette première variante permet par exemple de maintenir l'acheminement du liquide de lubrification lorsque l'éjecteur ne se trouve plus immergé dans le liquide de lubrification suite à cette certaine inclinaison des réservoirs. Dans ce cas, le réservoir principal ne doit pas obligatoirement se trouver au moins partiellement en dessous des réservoirs de récupération, les canalisations étant fonctionnelles uniquement lors d'une inclinaison du système mécanique.

Toutefois, chaque système d'acheminement peut comporter au moins un dispositif antiretour agencé dans chaque canalisation et configuré afin d'éviter un acheminement inverse du liquide de lubrification du réservoir principal vers un ou plusieurs réservoirs de récupération en dessous de cette certaine inclinaison.

Selon une seconde variante ces canalisations permettent un écoulement par gravité du liquide de lubrification de chaque réservoir de récupération vers le réservoir principal principalement en absence d'une inclinaison des réservoirs. Dans ce cas, le réservoir principal doit se trouver au moins partiellement en dessous des réservoirs de récupération. Cette seconde variante permet par exemple, lorsque le système mécanique n'est pas ou peu incliné, l'acheminement du liquide de lubrification d'un réservoir de récupération vers le réservoir principal est effectué d'une part par l'action de la gravité par l'intermédiaire des canalisations et d'autre part par l'action de l'éjecteur du système d'acheminement. En cas d'une inclinaison du système mécanique, l'acheminement par gravité peut être non fonctionnel, mais cet acheminement est toutefois assuré par l'éjecteur.

Chaque système d'acheminement peut également comporter au moins un dispositif antiretour agencé dans chaque canalisation et configuré afin d'éviter un acheminement inverse du liquide de lubrification du réservoir principal vers un ou plusieurs réservoirs de récupération lors de l'inclinaison importante du système mécanique.

Par contre, en cas de très forte inclinaison, il est possible que cet acheminement soit impossible aussi bien par gravité que par l'intermédiaire d'un éjecteur. Dans ce cas, la lubrification peut quand même être assurée grâce au liquide de lubrification se trouvant dans le réservoir principal. Cette très forte inclinaison n'est en général qu'une situation transitoire et dès qu'une inclinaison du système mécanique moins importante est atteinte, un acheminement du liquide de lubrification au minimum par l'intermédiaire de l'éjecteur, voire également par gravité est de nouveau fonctionnel.

Avantageusement, si cette situation de forte inclinaison dure un temps suffisamment important pour que le réservoir principal soit totalement vidé, rendant alors inopérant l'éjecteur du système d'acheminement, un retour à une inclinaison faible permet l'acheminement du liquide de lubrification vers le réservoir principal par gravité par l'intermédiaire des canalisations et, par suite, de rendre de nouveau fonctionnel l'éjecteur.

Les systèmes mécaniques dont l'inclinaison varie fortement se trouvent en particulier sur les aéronefs dont l'assiette peut varier fortement en cours de vol. Par exemple, un système mécanique est une boîte de transmission principale de puissance d'un aéronef à voilure tournante.

En effet, une telle boîte de transmission principale de puissance d'un aéronef, qui comporte plusieurs zones à lubrifier, peut comporter, en fonction de l'agencement des axes de ses entrées et de ses sorties, des points bas locaux qui sont à l'origine de l'apparition de zones de rétention du liquide de lubrification. De plus, les attitudes de vol de l'aéronef associées à la forme des carters de la boîte de transmission principale de puissance peuvent également provoquer la rétention du liquide de lubrification dans des zones éloignées du point d'aspiration des pompes de lubrification.

Une telle boîte de transmission principale de puissance constitue ainsi un système de transmission de l'aéronef comportant au moins deux zones ayant un besoin important en lubrification. Le dispositif de lubrification selon l'invention appliqué à ce système de transmission permet ainsi d'assurer simultanément la lubrification de ces différentes zones et la récupération du liquide de lubrification utilisé, quelles que soient les conditions de vol et indépendamment de l'inclinaison de l'aéronef.

Le liquide de lubrification utilisé pour chaque zone est alors récupéré dans des carters de la boîte de transmission principale de puissance, constitués par exemple par un carter central et un ou plusieurs carters latéraux. Le carter central de la boîte de transmission principale de puissance constitue alors le réservoir principal du dispositif de lubrification et chaque carter latéral constitue respectivement un réservoir de récupération.

En outre, afin de garantir le maintien opérationnel et la capacité de lubrification du système mécanique, le dispositif de lubrification selon l'invention comporte un circuit de lubrification principal et un ou plusieurs circuits de lubrification de secours.

Dans ce cadre, les premières conduites du système d'acheminement peuvent relier l'éjecteur au circuit de lubrification principal. Le liquide de lubrification circulant dans le circuit de lubrification principal et dans le circuit de lubrification de secours constitue le flux primaire du liquide de lubrification alimentant l'éjecteur.

Par ailleurs, selon le mode de fonctionnement du dispositif de lubrification, chaque circuit de lubrification de secours peut fonctionner de façon permanente ou bien uniquement en cas de dysfonctionnement du circuit de lubrification principal.

De fait, dans le cas où au moins un circuit de lubrification de secours fonctionne de façon permanente, les premières conduites du système d'acheminement selon l'invention relient l'éjecteur à un ou plusieurs circuits de lubrification de secours. Le liquide de lubrification circulant dans le circuit de lubrification de secours constitue alors le flux primaire du liquide de lubrification alimentant l'éjecteur.

Dans le cas où chaque circuit de lubrification de secours ne fonctionne pas de façon permanente, le dispositif de lubrification peut en outre comporter une vanne agencée en aval du générateur de débit alimentant le circuit de lubrification de secours en liquide de lubrification et en amont de ce circuit de lubrification de secours. Les premières conduites de chaque système d'acheminement relient chaque éjecteur à cette vanne. Cette vanne est configurée afin que le générateur de débit de débit alimentant ce circuit de lubrification de secours alimente en liquide de lubrification dans une première position de la vanne uniquement les premières conduites et, par suite, chaque éjecteur, et dans une seconde position de la vanne simultanément chaque éjecteur, par l'intermédiaire des premières conduites, et ce circuit de lubrification de secours.

Enfin, quelle que soit le mode de fonctionnement du dispositif de lubrification, les premières conduites du système d'acheminement peuvent relier simultanément l'éjecteur au circuit de lubrification principal et à un ou plusieurs circuits de lubrification de secours. Dans ce cas, l'éjecteur reste fonctionnel y compris en cas de dysfonctionnement du circuit de lubrification principal ou bien d'un ou plusieurs circuits de lubrification de secours.

On peut noter que chaque éjecteur est configuré afin de générer principalement un débit de liquide de lubrification afin d'acheminer ce liquide de lubrification vers le réservoir principal. Le dimensionnement de chaque éjecteur peut ainsi être adapté afin de privilégier cette génération de débit sans contrainte particulière sur une génération de pression.

La présente invention a aussi pour objet un système de transmission de puissance destiné à un aéronef à voilure tournante. Ce système de transmission est par exemple formé par une boîte de transmission principale de puissance et est muni d'un dispositif de lubrification tel que précédemment décrit. Un carter central de la boîte de transmission principale de puissance constitue le réservoir principal du dispositif de lubrification alors que chaque carter latéral de cette boîte de transmission principale de puissance constitue respectivement un réservoir de récupération.

Avantageusement, le dispositif de lubrification appliqué à ce système de transmission permet ainsi de lubrifier chaque zone de la boîte de transmission principale de puissance qui en a besoin et de récupérer le liquide de lubrification utilisé, quelles que soient les conditions de vol et les assiettes de l'aéronef.

En outre, le dispositif de lubrification peut comporter un circuit de lubrification principal et un ou plusieurs circuits de lubrification de secours afin que le système mécanique soit lubrifié en permanence indépendamment d'éventuels dysfonctionnements d'un quelconque circuit de lubrification, et fonctionne ainsi efficacement et durablement pendant le vol de l'aéronef.

L'invention et ses avantages apparaîtront avec plus de détails dans le cadre de la description qui suit avec des exemples donnés à titre illustratif en référence aux figures annexées 1 à 4 qui représentent des exemples d'un dispositif de lubrification d'un système mécanique.

Les éléments présents dans plusieurs figures distinctes sont affectés d'une seule et même référence.

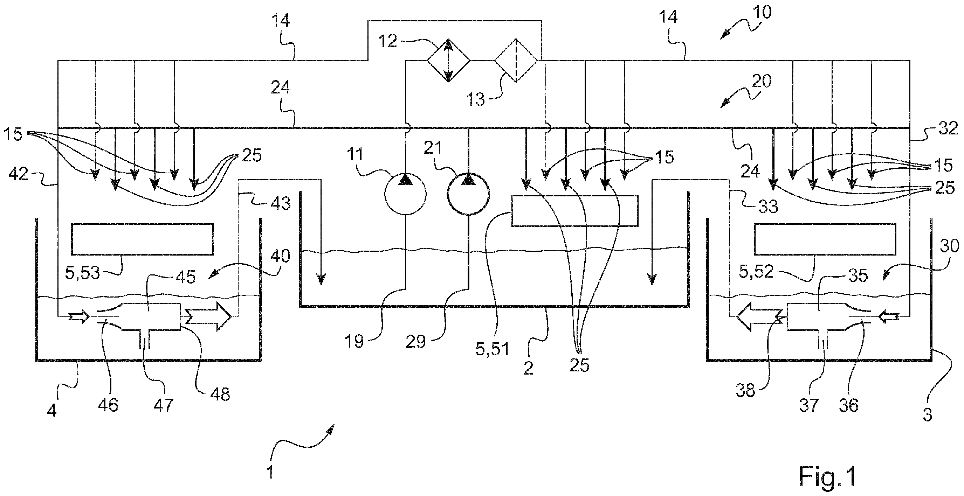

Chaque dispositif de lubrification 1 représenté sur les figures 1 à 4 a pour fonction de lubrifier un système mécanique 5 comportant notamment des éléments tournants, tels que des arbres et des roulements, ainsi que des éléments de transmission de puissance et de réduction ou d'augmentation de vitesse de rotation, tels que des pignons et/ou des engrenages. Ce système mécanique 5 est par exemple une boîte de transmission principale de puissance équipant un aéronef à voilure tournante et comportant trois zones 51,52,53 ayant un besoin important en lubrification, telles que représentées sur les figures 1 à 3.

Afin de lubrifier efficacement ces trois zones 51,52,53 du système mécanique 5, le dispositif de lubrification 1 comporte, de façon commune à chaque exemple représenté sur les figures 1 à 3, un réservoir principal 2 contenant un liquide de lubrification, deux réservoirs de récupération 3,4, un circuit de lubrification principal 10, un circuit de lubrification de secours 20, deux générateurs de débit 11, 21 et deux systèmes d'acheminement 30,40 attachés respectivement à un réservoir de récupération 3,4.

Le circuit de lubrification principal 10 comporte un échangeur thermique 12, un filtre 13, des gicleurs 15 et des conduites 14 reliant ces composants du circuit de lubrification principal 10. Le générateur de débit 11 est dit « générateur de débit principal » et permet de puiser le liquide de lubrification situé dans le réservoir 2 par l'intermédiaire d'un point d'aspiration 19 situé dans la partie inférieure de ce réservoir 2 et d'alimenter ainsi le circuit de lubrification principal 10 avec le liquide de lubrification.

Le liquide de lubrification traverse alors l'échangeur thermique 12 afin d'être refroidi avant de passer à travers le filtre 13, d'atteindre les gicleurs 15 et d'être pulvérisé sur les zones 51,52,53 du système mécanique 5 à lubrifier.

Le circuit de lubrification de secours 20 comporte quand à lui des gicleurs 25 et des conduites 24. Le générateur de débit 21 est dit « générateur de débit de secours » et permet de puiser le liquide de lubrification situé dans le réservoir 2 par l'intermédiaire d'un point d'aspiration 29 situé dans la partie inférieure de ce réservoir 2 et d'alimenter ainsi le circuit de lubrification de secours 20 avec le liquide de lubrification.

Le liquide de lubrification est ainsi dirigé vers les gicleurs 25 afin d'être pulvérisé sur les zones 51,52,53 à lubrifier.

Les gicleurs 15,25 sont spécifiques et distincts pour le circuit de lubrification principal 10 et le circuit de lubrification de secours 20 tels que représentés sur les figures 1 à 4, mais peuvent cependant être confondus et communs à ces deux circuits de lubrification 10,20.

Le réservoir principal 2 est formé par le carter central de la boîte de transmission principale de puissance. Chaque carter latéral de cette boîte de transmission principale de puissance forme un réservoir de récupération 3,4. Le réservoir principal 2 est ainsi agencé sous la première zone 51 de la boîte de transmission principale de puissance alors que chaque réservoir de récupération 3,4 est respectivement agencé sous les deuxième et troisième zones 52,53 de cette boîte de transmission principale de puissance. De la sorte, le liquide de lubrification utilisé pour lubrifier la première zone 51 s'écoule dans le réservoir principal 2 et le liquide de lubrification utilisé pour lubrifier les deuxième et troisième zones 52,53 s'écoule respectivement dans un réservoir de récupération 3,4.

Chaque système d'acheminement 30,40 est configuré afin d'acheminer le liquide de lubrification récupéré par chaque réservoir de récupération 3,4 vers le réservoir principal 2. Dans ce but, chaque système d'acheminement 30,40 comporte un éjecteur 35,45 agencé dans un réservoir de récupération 3,4, ainsi que des premières et secondes conduites 32,33,42,43.

Chaque éjecteur 35,45 comporte une buse d'admission 36,46, un canal secondaire d'admission 37,47 et une sortie 38,48. Les premières conduites 32,42 sont reliées à la buse d'admission 36,46 de l'éjecteur 35,45 et les secondes conduites 33,43 sont reliées à la sortie 38,48 de l'éjecteur 35,45. L'éjecteur 35,45 étant agencé dans un réservoir de récupération 3,4, le canal secondaire d'admission 37,47 est en contact avec le liquide de lubrification situé dans ce réservoir de récupération 3,4, lorsque l'éjecteur 35,45 est immergé au moins partiellement dans ce liquide de lubrification.

Selon le premier exemple de dispositif de lubrification 1 représenté sur la figure 1, les premières conduites 32,42 de chaque système d'acheminement 30,40 relient l'éjecteur 35,45 simultanément au circuit de lubrification principal 10 et au circuit de lubrification de secours 20. De la sorte, chaque éjecteur 35,45 est alimenté en liquide de lubrification par l'un ou l'autre des circuits de lubrification principal 10 ou de secours 20, voire les deux simultanément si ces deux circuit de lubrification 10,20 fonctionnent simultanément. Chaque éjecteur 35,45 est ainsi alimenté par le liquide de lubrification situé dans le réservoir principal 2 par l'intermédiaire du générateur de débit principal 11 et/ou du générateur de débit de secours 21.

Les secondes conduites 33,43, reliées à la sortie 38,48 de l'éjecteur 35,45, permettent de refouler le liquide de lubrification présent dans chaque réservoir de récupération 3,4 et aspiré par le canal secondaire d'admission 37,47, puis de l'acheminer vers le réservoir principal 2. Le réservoir principal 2 est ainsi alimenté par le liquide de lubrification récupéré dans chaque réservoir de récupération 3,4.

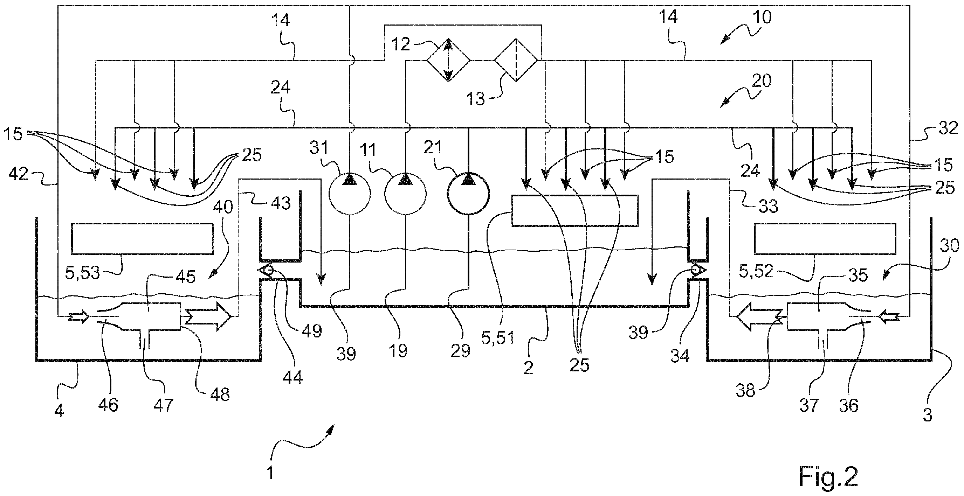

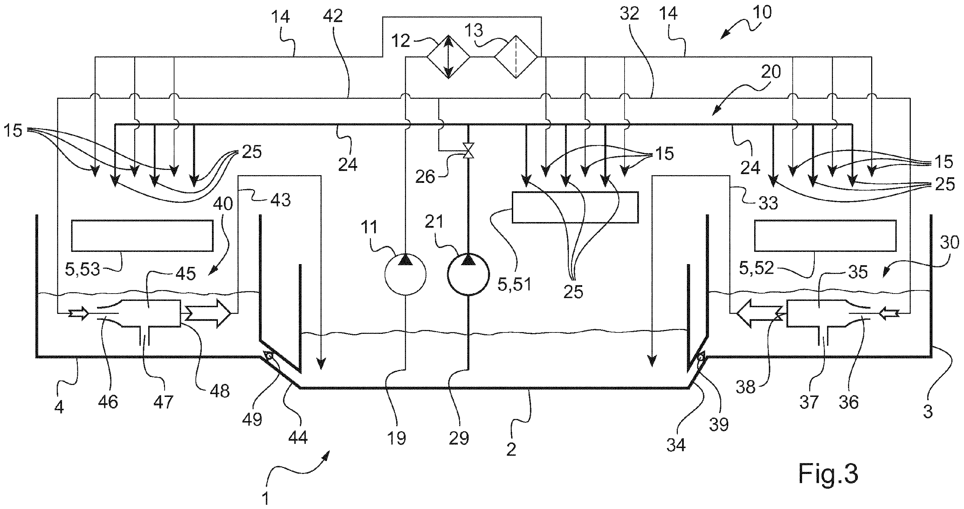

Le fonctionnement de chacun des systèmes d'acheminement 30,40 des deux exemples représentés sur les figures 2 et 3 est similaire à ce premier exemple, seul le moyen d'alimentation de chaque éjecteur 35,45 en liquide de lubrification étant différents.

Le dispositif de lubrification 1 selon un deuxième exemple non revendiqué représenté sur la figure 2 comporte un générateur de débit complémentaire 31 aspirant le liquide de lubrification situé dans le réservoir principal 2. Les premières conduites 32,42 relient alors chaque éjecteur 35,45 à ce générateur de débit complémentaire 31 afin d'alimenter cet éjecteur 35,45 avec le liquide de lubrification situé dans le réservoir principal 2.

Chaque système d'acheminement 30,40 fonctionne ainsi de façon indépendante du circuit de lubrification principal 10 et du circuit de lubrification de secours 20.

De plus, chaque système d'acheminement 30,40 comporte des canalisations 34,44 reliant chaque réservoir de récupération 3,4 au réservoir principal 2. Ces canalisations 34,44 sont configurées afin que le liquide de lubrification situé dans un réservoir de récupération 3,4 s'écoule par gravité vers le réservoir principal 2 lorsque le système mécanique 5 est incliné. En effet, on peut constater sur la figure 2 que le réservoir principal 2 est agencé au-dessus de chaque réservoir de récupération 3,4. En conséquence, lorsque le système mécanique 5 n'est pas incliné, comme représenté sur la figure 2, l'action de la gravité ne permet pas l'acheminement du liquide de lubrification depuis chaque réservoir de récupération 3,4 vers le réservoir principal 2 via les canalisations 34,44.

En revanche, suite à une inclinaison du système mécanique 5, un des deux réservoirs de récupération 3,4 pourra se trouver au-dessus du réservoir principal 2 et permettre ainsi un acheminement du liquide de lubrification depuis ce réservoir de récupération 3,4 vers le réservoir principal 2 via les canalisations 34,44. Cet acheminement peut être complémentaire du fonctionnement de l'éjecteur 35,45 de chaque système d'acheminement 30,40 ou bien pallier un non fonctionnement de cet éjecteur 35,45 s'il venait par exemple à émerger du liquide de lubrification.

En outre, chaque système d'acheminement 30,40 comporte un dispositif antiretour 39,49, par exemple un clapet antiretour, agencé dans chaque canalisation 39,49 afin d'éviter que l'action de la gravité provoque un acheminement inverse du réservoir principal 2 vers chaque réservoir de récupération 3,4.

Selon le troisième exemple représenté sur la figure 3, le dispositif de lubrification 1 comporte une vanne 26 agencée en aval du générateur de débit de secours 21 et en amont du circuit de lubrification de secours 20. Les premières conduites 32,42 de chaque système d'acheminement 30,40 relient chaque éjecteur 35,45 à cette vanne 26. De la sorte, chaque éjecteur 35 est alimenté en liquide de lubrification uniquement par le générateur de débit de secours 21 alimentant le circuit de lubrification de secours 20. Chaque système d'acheminement 30,40 fonctionne ainsi de façon indépendante du circuit de lubrification principal 10.

La vanne 26 possède au moins deux positions. Dans une première position, la vanne 26 permet que le générateur de débit de secours 21 alimente avec le liquide de lubrification situé dans le réservoir principal 2 uniquement les premières conduites 32,42 de chaque système d'acheminement 30,40 et, par suite, chaque éjecteur 35,45. Dans cette première position, le circuit de lubrification de secours 20 est pas alimenté en liquide lubrification. Cette première position de la vanne 26 permet ainsi l'acheminement par l'intermédiaire de chaque éjecteur 35,45 du liquide de lubrification situé dans chaque réservoir de récupération 3,4 vers le réservoir principal 2 sans alimentation en liquide de lubrification du circuit de lubrification de secours 20.

Dans une seconde position, la vanne 26 permet que le générateur de débit de secours 21 alimente simultanément, avec le liquide de lubrification situé dans le réservoir principal 2, les premières conduites 32,42 de chaque système d'acheminement 30,40 et le circuit de lubrification de secours 20.

De plus, chaque système d'acheminement 30,40 comporte des canalisations 34,44 reliant chaque réservoir de récupération 3,4 au réservoir principal 2. Ces canalisations 34,44 sont configurées afin que le liquide de lubrification situé dans un réservoir de récupération 3,4 s'écoule par gravité vers le réservoir principal 2 lorsque le système mécanique n'est pas ou est peu incliné, le réservoir principal 2 étant positionné à un niveau inférieur verticalement vis-à-vis des réservoirs de récupération 3,4 comme représenté sur la figure 3. Cet acheminement est alors complémentaire du fonctionnement de l'éjecteur 35,45 de chaque système d'acheminement 30,40.

Lorsque le système mécanique 5 est incliné, le réservoir principal 2 peut se trouver au même niveau voir au dessus d'un réservoir de récupération 3,4. Dans ce cas, l'action de la gravité ne permet plus l'acheminement du liquide de lubrification depuis ce réservoir de récupération 3,4 vers le réservoir principal 2 via les canalisations 34,44. Avantageusement, l'éjecteur 35,45 permet cet acheminement et garantit que le réservoir principal 2 est toujours alimenté par le liquide de lubrification situé dans au moins un réservoir de récupération 3,4.

En outre, comme pour le deuxième exemple, chaque système d'acheminement 30,40 comporte un dispositif antiretour 39,49 agencé dans chaque canalisation 39,49 afin d'éviter un acheminement inverse du liquide de lubrification situé dans le réservoir principal 2 vers chaque réservoir de récupération.

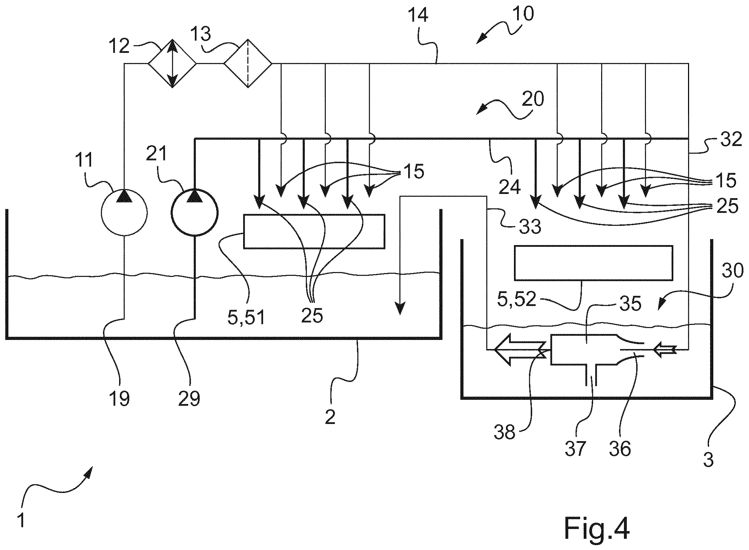

Par ailleurs, le dispositif de lubrification 1 peut également utiliser un seul réservoir de récupération 3 comme représenté sur la figure 4. Selon ce quatrième exemple de dispositif de lubrification 1, le système mécanique 5 est par exemple une boîte de transmission principale de puissance équipant un aéronef à voilure tournante et comportant deux zones 51,52 à lubrifier. Le réservoir principal 2 est alors formé par le carter central de la boîte de transmission principale de puissance et le réservoir de récupération 3 est formé par un carter latéral de cette boîte de transmission principale de puissance.

Le fonctionnement de ce dispositif de lubrification 1 est analogue au premier exemple représenté sur la figure 1, les premières conduites 32 du système d'acheminement 30 relient l'éjecteur 35 simultanément au circuit de lubrification principal 10 et au circuit de lubrification de secours 20. De la sorte, l'éjecteur 35 est alimenté en liquide de lubrification par l'un ou l'autre des circuits de lubrification principal 10 ou de secours 20, voire les deux simultanément. L'éjecteur 35 est ainsi alimenté par le liquide de lubrification situé dans le réservoir principal 2 par l'intermédiaire du générateur de débit principal 11 et/ou du générateur de débit de secours 21.

Les secondes conduites 33, reliées à la sortie 38 de l'éjecteur 35, permettent de refouler le liquide de lubrification présent dans le réservoir de récupération 3, puis de l'acheminer vers le réservoir principal 2.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de lubrification (1) d'un système mécanique (5), ledit dispositif de lubrification (1) comportant un réservoir principal (2) contenant un liquide de lubrification, au moins un réservoir de récupération (3,4), un circuit de lubrification principal (10), au moins un circuit de lubrification de secours (20), au moins un générateur de débit (11,21) pour chaque circuit de lubrification (10,20) et un système d'acheminement (30,40) pour chaque réservoir de récupération (3,4), chaque générateur de débit (11,21) alimentant un circuit de lubrification (10,20) avec ledit liquide de lubrification situé dans ledit réservoir principal (2), chaque système d'acheminement (30,40) étant configuré afin d'acheminer ledit liquide de lubrification situé dans un réservoir de récupération (3,4) vers ledit réservoir principal (2),
chaque système d'acheminement (30,40) comporte un éjecteur (35,45) ainsi que des premières et secondes conduites (32,33,42,43), ledit éjecteur (35,45) étant agencé dans un réservoir de récupération (3,4), lesdites premières conduites (32,42) étant reliées audit éjecteur (35,45) afin d'alimenter ledit éjecteur (35,45) en liquide de lubrification situé dans ledit réservoir principal (2), lesdites secondes conduites (33,43) étant reliées audit éjecteur (35,45) afin d'acheminer vers ledit réservoir principal (2) d'une part ledit liquide de lubrification circulant dans lesdites premières conduites (32,42) et d'autre part ledit liquide de lubrification situé dans ledit réservoir de récupération (3,4),
**caractérisé en ce que** lesdites premières conduites (32,42) relient ledit éjecteur (35,45) à au moins un circuit de lubrification de secours (20).

2. Dispositif de lubrification (1) selon la revendication 1,
**caractérisé en ce que** ledit éjecteur (35,45) est muni d'une buse d'admission (36,46) d'un flux primaire dudit liquide de lubrification, d'un canal secondaire d'admission (37,47) d'un flux secondaire dudit liquide de lubrification et d'une sortie (38,48), lesdites premières conduites (32,42) étant reliées à ladite buse d'admission (36,46) dudit éjecteur (35,45), lesdites secondes conduites (33,43) étant reliées à ladite sortie (38,48) dudit éjecteur (35,45), ledit canal secondaire d'admission (37,47) étant en contact avec ledit liquide de lubrification situé dans ledit réservoir de récupération (3,4).

3. Dispositif de lubrification (1) selon la revendication 2,
**caractérisé en ce que** ledit éjecteur (35,45) est configuré afin de générer principalement un débit de liquide de lubrification à ladite sortie (38,48) dans le but d'acheminer ledit liquide de lubrification situé dans ledit réservoir de récupération (3,4) vers ledit réservoir principal (2).

4. Dispositif de lubrification (1) selon l'une quelconque des revendications 1 à 3,
**caractérisé en ce que** ledit dispositif de lubrification (1) comporte un générateur de débit complémentaire (31) aspirant ledit liquide de lubrification situé dans ledit réservoir principal (2), lesdites premières conduites (32,42) reliant ledit éjecteur (35,45) audit générateur de débit complémentaire (31) afin d'alimenter ledit éjecteur (35,45) avec ledit liquide de lubrification situé dans ledit réservoir principal (2), ledit éjecteur (35,45) étant alimenté en liquide de lubrification par l'intermédiaire dudit générateur de débit complémentaire (31).

5. Dispositif de lubrification (1) selon l'une quelconque des revendications 1 à 4,
**caractérisé en ce que** ledit dispositif de lubrification (1) comporte une vanne (26) agencée en aval dudit générateur de débit (11,21) alimentant au moins un circuit de lubrification de secours (20) en liquide de lubrification et en amont d'au moins un circuit de lubrification de secours (20), ladite vanne (26) étant configurée afin d'alimenter en liquide de lubrification dans une première position de ladite vanne (26) lesdites premières conduites (32,42) et, par suite, chaque éjecteur (35,45) et dans une seconde position de ladite vanne (26) simultanément lesdites premières conduites (32,42) et ledit au moins un circuit de lubrification de secours (20).

6. Dispositif de lubrification (1) selon l'une quelconque des revendications 1 à 5,
**caractérisé en ce que** ledit système d'acheminement (30,40) comporte des canalisations (34,44) reliant ledit réservoir de récupération (3,4) audit réservoir principal (2), lesdites canalisations (34,44) étant configurées afin que ledit liquide de lubrification situé dans un réservoir de récupération (3,4) s'écoule par gravité vers ledit réservoir principal (2).

7. Dispositif de lubrification (1) selon la revendication 6,
**caractérisé en ce que** ledit système d'acheminement (30,40) comporte au moins un dispositif antiretour (39,49) agencé dans lesdites canalisations (34,44) et configuré afin d'éviter un acheminement inverse dudit liquide de lubrification dudit réservoir principal (2) vers un ou plusieurs réservoirs de récupération (3,4).

8. Dispositif de lubrification (1) selon l'une quelconque des revendications 1 à 7,
**caractérisé en ce que** ledit système mécanique (5) est un système de transmission de puissance d'un aéronef.

9. Système de transmission de puissance destiné à un aéronef et comportant une boîte de transmission principale de puissance munie d'au moins deux zones (51,52,53) ayant un besoin important en lubrification,
**caractérisé en ce que** ledit système de transmission de puissance est muni d'un dispositif de lubrification (1) selon la revendication 8, un carter central de ladite boîte de transmission principale de puissance constituant ledit réservoir principal (2) et chaque carter latéral de ladite boîte de transmission principale de puissance constituant respectivement un réservoir de récupération (3,4).

## Patentansprüche

1. Schmiervorrichtung (1) für ein mechanisches System (5), wobei die Schmiervorrichtung (1) einen Hauptbehälter (2), der eine Schmierflüssigkeit enthält, mindestens einen Rückgewinnungsbehälter (3, 4), einen Hauptschmierkreislauf (10), mindestens einen Notschmierkreislauf (20), mindestens einen Durchflussgenerator (11, 21) für jeden Schmierkreislauf (10, 20) und ein Fördersystem (30, 40) für jeden Rückgewinnungstank (3, 4) umfasst, wobei jeder Durchflussgenerator (11, 21) einen Schmierkreislauf (10, 20) mit der in dem Hauptbehälter (2) befindlichen Schmierflüssigkeit versorgt, wobei jedes Fördersystem (30, 40) konfiguriert ist, um die in einem Rückgewinnungstank (3, 4) befindliche Schmierflüssigkeit zu dem Hauptbehälter (2) zu befördern,
wobei jedes Fördersystem (30, 40) einen Ejektor (35, 45) und erste und zweite Leitungen (32, 33, 42, 43) umfasst, wobei der Ejektor (35, 45) in einem Rückgewinnungsbehälter (3, 4) angeordnet ist, wobei die ersten Leitungen (32, 42) mit dem Ejektor (35, 45) verbunden sind, um den Ejektor (35, 45) mit Schmierflüssigkeit aus dem Haupttank (2) zu versorgen, wobei die zweiten Leitungen (33, 43) mit dem Ejektor (35, 45) verbunden sind, um einerseits die in den ersten Leitungen (32, 42) zirkulierende Schmierflüssigkeit und andererseits die in dem Rückgewinnungstank (3, 4) befindliche Schmierflüssigkeit zu dem Haupttank (2) zu befördern,
**dadurch gekennzeichnet, dass** die ersten Leitungen (32, 42) den Ejektor (35, 45) mit mindestens einem Notschmierkreislauf (20) verbinden.

2. Schmiervorrichtung (1) nach Anspruch 1,
**dadurch gekennzeichnet, dass** der Ejektor (35, 45) mit einer Einlassdüse (36, 46) für einen Primärstrom der Schmierflüssigkeit, einem sekundären Einlasskanal (37, 47) für einen Sekundärstrom der Schmierflüssigkeit und einem Auslass (38, 48) versehen ist, wobei die ersten Leitungen (32,42) mit der Einlassdüse (36, 46) des Ejektors (35, 45) verbunden sind, die zweiten Leitungen (33, 43) mit dem Auslass (38, 48) des Ejektors (35, 45) verbunden sind, und der sekundäre Einlasskanal (37, 47) mit der in dem Rückgewinnungstank (3, 4) befindlichen Schmierflüssigkeit in Kontakt steht.

3. Schmiervorrichtung (1) nach Anspruch 2,
**dadurch gekennzeichnet, dass** der Ejektor (35, 45) konfiguriert ist, um in erster Linie einen Strom von Schmierflüssigkeit an dem Auslass (38, 48) zu erzeugen, um die Schmierflüssigkeit, die sich in dem Rückgewinnungstank (3, 4) befindet, zu dem Haupttank (2) zu befördern.

4. Schmiervorrichtung (1) nach einem der Ansprüche 1 bis 3,
**dadurch gekennzeichnet, dass** die Schmiervorrichtung (1) einen komplementären Durchflussgenerator (31) umfasst, der die in dem Hauptbehälter (2) befindliche Schmierflüssigkeit ansaugt, wobei die ersten Leitungen (32, 42) den Ejektor (35, 45) mit dem komplementären Durchflussgenerator (31) verbinden, um den Ejektor (35, 45) mit der in dem Hauptbehälter (2) befindlichen Schmierflüssigkeit zu versorgen, wobei der Ejektor (35, 45) mittels des komplementären Durchflussgenerators (31) mit Schmierflüssigkeit versorgt wird.

5. Schmiervorrichtung (1) nach einem der Ansprüche 1 bis 4,
**dadurch gekennzeichnet, dass** die Schmiervorrichtung (1) ein Ventil (26), das stromabwärts vom mindestens einen Notschmierkreislauf (20) mit Schmierflüssigkeit versorgenden Durchflussgenerator (11, 21), und stromaufwärts von mindestens einem Notschmierkreislauf (20) angeordnet ist, wobei das Ventil (26) konfiguriert ist, um in einer ersten Position des Ventils (26) die ersten Leitungen (32, 42) und damit jeden Ejektor (35, 45) und in einer zweiten Position des Ventils (26) gleichzeitig die ersten Leitungen (32, 42) und den mindestens einen Notschmierkreislauf (20) mit Schmierflüssigkeit zu versorgen.

6. Schmiervorrichtung (1) nach einem der Ansprüche 1 bis 5,
**dadurch gekennzeichnet, dass** das Fördersystem (30, 40) Leitungen (34, 44) umfasst, die den Rückgewinnungsbehälter (3, 4) mit dem Hauptbehälter (2) verbinden, wobei die Leitungen (34, 44) so konfiguriert sind, dass die Schmierflüssigkeit, die sich in einem Rückgewinnungsbehälter (3, 4) befindet, durch Schwerkraft zum Hauptbehälter (2) fließt.

7. Schmiervorrichtung (1) nach Anspruch 6,
**dadurch gekennzeichnet, dass** das Fördersystem (30, 40) mindestens eine Rückschlagvorrichtung (39, 49) umfasst, die in den Leitungen (34, 44) angeordnet und konfiguriert ist, um eine umgekehrte Leitung der Schmierflüssigkeit aus dem Hauptbehälter (2) zu einem oder mehreren Rückgewinnungsbehältern (3, 4) zu verhindern.

8. Schmiervorrichtung (1) nach einem der Ansprüche 1 bis 7,
**dadurch gekennzeichnet, dass** das mechanische System (5) ein Kraftübertragungssystem eines Flugzeugs ist.

9. Kraftübertragungssystem für ein Flugzeug, das ein Hauptkraftübertragungsgetriebe umfasst, das mindestens zwei Bereiche (51, 52, 53) mit hohem Schmierungsbedarf aufweist,
**dadurch gekennzeichnet, dass** das Kraftübertragungssystem mit einer Schmiervorrichtung (1) nach Anspruch 8 versehen ist, wobei ein zentrales Gehäuse des Hauptkraftübertragungsgetriebes den Hauptbehälter (2) bildet und jedes seitliche Gehäuse des Hauptkraftübertragungsgetriebes jeweils einen Rückgewinnungsbehälter (3, 4) bildet.

## Claims

1. Device (1) for lubricating a mechanical system (5), said lubrication device (1) comprising a main tank (2) containing a lubrication liquid, at least one recovery tank (3, 4), a main lubrication circuit (10), at least one emergency lubrication circuit (20), at least one flow generator (11, 21) for each lubrication circuit (10, 20) and a feeding system (30, 40) for each recovery tank (3, 4), each flow generator (11, 21) supplying a lubrication circuit (10, 20) with said lubrication liquid located in said main tank (2), each feeding system (30, 40) being configured to feed said lubrication liquid located in a recovery tank (3, 4) to said main tank (2), each feeding system (30, 40) comprising an ejector (35, 45) and first and second pipes (32, 33, 42, 43), said ejector (35, 45) being arranged in a recovery tank (3, 4), said first pipes (32, 42) being connected to said ejector (35, 45) in order to supply said ejector (35, 45) with lubrication liquid located in said main tank (2), said second pipes (33, 43) being connected to said ejector (35, 45) in order to feed said lubrication liquid circulating in said first pipes (32, 42) and said lubrication liquid located in said recovery tank (3, 4) to said main tank (2), **characterised in that** said first pipes (32, 42) connect said ejector (35, 45) to at least one emergency lubrication circuit (20).

2. Lubrication device (1) according to claim 1, **characterised in that** said ejector (35, 45) is provided with an intake nozzle (36, 46) for a primary flow of said lubrication liquid, a secondary intake channel (37, 47) for a secondary flow of said lubrication liquid and an outlet (38, 48), said first pipes (32, 42) being connected to said intake nozzle (36, 46) of said ejector (35, 45), said second pipes (33, 43) being connected to said outlet (38, 48) of said ejector (35, 45), said secondary intake channel (37, 47) being in contact with said lubrication liquid located in said recovery tank (3, 4).

3. Lubrication device (1) according to claim 2, **characterised in that** said ejector (35, 45) is configured to mainly generate a flow of lubrication liquid at said outlet (38, 48) for the purpose of feeding said lubrication liquid located in said recovery tank (3, 4) to said main tank (2).

4. Lubrication device (1) according to any of claims 1 to 3, **characterised in that** said lubrication device (1) comprises an additional flow generator (31) drawing up said lubrication liquid located in said main tank (2), said first pipes (32, 42) connecting said ejector (35, 45) to said additional flow generator (31) in order to supply said ejector (35, 45) with said lubrication liquid located in said main tank (2), said ejector (35, 45) being supplied with lubrication liquid by means of said additional flow generator (31).

5. Lubrication device (1) according to any of claims 1 to 4, **characterised in that** said lubrication device (1) comprises a valve (26) arranged downstream of said flow generator (11, 21) supplying at least one emergency lubrication circuit (20) with lubrication liquid and upstream of at least one emergency lubrication circuit (20), said valve (26) being configured to supply said first pipes (32, 42) and then each ejector (35, 45) with lubrication liquid in a first position of said valve (26) and to simultaneously supply said first pipes (32, 42) and said at least one emergency lubrication circuit (20) in a second position of said valve (26).

6. Lubrication device (1) according to any of claims 1 to 5, **characterised in that** said feeding system (30, 40) comprises conduits (34, 44) connecting said recovery tank (3, 4) to said main tank (2), said conduits (34, 44) being configured such that said lubrication liquid located in a recovery tank (3, 4) flows by gravity to said main tank (2).

7. Lubrication device (1) according to claim 6, **characterised in that** said feeding system (30, 40) comprises at least one non-return device (39, 49) arranged in said conduits (34, 44) and configured to prevent reverse feeding of said lubrication liquid from said main tank (2) to one or more recovery tanks (3, 4).

8. Lubrication device (1) according to any of claims 1 to 7, **characterised in that** said mechanical system (5) is a power transmission system of an aircraft.

9. Power transmission system intended for an aircraft and comprising a main power transmission box provided with at least two zones (51, 52, 53) having a significant need for lubrication, **characterised in that** said power transmission system is provided with a lubrication device (1) according to claim 8, a central casing of said main power transmission box constituting said main tank (2) and each lateral casing of said main power transmission box constituting, respectively, a recovery tank (3, 4).
